(19)

Europäisches
Patentamt
European
Patent Office
Office européen
des brevets

(11)  **EP 2 065 887 A1**

(12)  # EUROPEAN PATENT APPLICATION

(43) Date of publication:
**03.06.2009 Bulletin 2009/23**

(51) Int Cl.:
***G11B 5/596*** *(2006.01)*

(21) Application number: **08018000.3**

(22) Date of filing: **14.10.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **28.11.2007 JP 2007311700**

(71) Applicant: **Hitachi Global Storage Technologies
Netherlands
B.V.
1076 AZ  Amsterdam (NL)**

(72) Inventors:
  • **Akagi, Kyo
    Fuchu-shi,
    Tokyo, 183-0057 (JP)**
  • **Ishiwata, Kensuke
    Yokohama-shi,
    Kanagawa, 247-0009 (JP)**

  • **Kouno, Takashi
    Kasumigaura-shi,
    Ibaraki, 315-0052 (JP)**
  • **Takeichi, Atsushi
    Sagamihara-shi,
    Kanagawa, 228-0818 (JP)**
  • **Kuroki, Kenji
    Fujisawa-shi,
    Kanagawa, 252-0814 (JP)**
  • **Iwaisako, Toshihiko
    Fujisawa-shi,
    Kanagawa, 251-0861 (JP)**

(74) Representative: **Kirschner, Klaus Dieter et al
Puschmann & Borchert
Partnerschaft
Postfach 10 12 31
80086 München (DE)**

(54)  ## Method for manufacturing magnetic disk unit

(57)  To provide a method for manufacturing a magnetic disk unit, the method permitting easy and efficient introduction of a low-density gas into the enclosure. The enclosure 10 of the magnetic disk unit has the gas inlet 11i and the gas outlet 11e, each of which is provided with a filter. When the enclosure 10 is filled with helium, the mass flow rate of helium being supplied to the gas inlet 11i is detected and the mass flow rate of helium being supplied to the gas inlet 11i is controlled according to the thus detected mass flow rate of helium.

EP 2 065 887 A1

**Description**

The present invention relates to a method for manufacturing a magnetic disk unit, the method including a step of introducing a low-density gas, which has a lower density than air, into the enclosure.

A magnetic disk unit, such as a hard disk, is provided with a magnetic disk which has a plurality of tracks concentrically arranged thereon, and each track has servo data written therein. The servo data contains address data and burst signals to be used for position control of the magnetic head.

One of the known methods for writing servo data is so-called self servo write (SSW), which writes servo data into the magnetic disk by controlling the magnetic head and actuator, which are accommodated in the enclosure, after the magnetic disk unit has been assembled.

The problem involved in recording servo data in a magnetic disk is that air flows produced by the rotating magnetic disk shake the support system of the magnetic head, thereby forming distorted tracks on the magnetic disk. The distorted tracks are a main cause that obstructs the positioning of the magnetic head.

Japanese Patent Laid-open No. 2006-40423 discloses a technique to carry out self servo write while the enclosure is filled with helium which has been introduced from a gas inlet (hole) passing through the enclosure of the magnetic disk unit. The magnetic disk in the enclosure filled with helium hardly shakes and hence permits nearly round tracks to be formed because helium has a lower density than air.

Unfortunately, the technique disclosed in Japanese Patent Laid-open No. 2006-40423 requires that introduction of helium should be carried out in an environment (such as clean room) with a high degree of air cleanliness in order to prevent particles from entering the enclosure through the gas inlet hole. This imposes restrictions on the manufacturing process.

The present invention was completed in view of the foregoing. It is an object of the present invention to provide a method for manufacturing a magnetic disk unit, the method permitting easy and efficient introduction of a low-density gas into the enclosure.

The gist of the present invention resides in a method for manufacturing a magnetic disk unit comprised of a magnetic disk to store data, a magnetic head to write and read the data, and an actuator to move the magnetic head relative to the magnetic disk, which are accommodated in a hermetically sealed enclosure, the enclosure having a gas inlet and a gas outlet for communication between the inside and outside thereof, the gas inlet and gas outlet having respective filters attached thereto, wherein the method includes a step of filling the enclosure with a low-density gas having a lower density than air through the gas inlet by detecting the mass flow rate of the low-density gas being supplied to the gas inlet and controlling the mass flow rate of the low-density gas being supplied to the gas inlet according to the thus detected mass flow rate.

According to one embodiment of the present invention, the filling step is accomplished by detecting the pressure of the low-density gas being supplied to the gas inlet and controlling the mass flow rate of the low-density gas being supplied to the gas inlet according to the thus detected mass flow rate and pressure of the low-density gas.

According to this embodiment, the mass flow rate of the low-density gas being supplied to the gas inlet is controlled such that the pressure in the enclosure is maintained at a prescribed level according to the mass flow rate and pressure of the low-density gas which have been detected and the formula 1 given below.

$$Q_1 = c \frac{\pi}{4} d_{in}^2 \sqrt{\frac{2(P_1 - P_2)}{\rho}}$$ (Formula 1)

where, $Q_1$ is the mass flow rate of the low-density gas being supplied to the gas inlet, c is a flow rate constant, din is a diameter of the gas inlet, $P_1$ is the pressure of the low-density gas being supplied to the gas inlet, $P_2$ is the pressure in the hermetically sealed enclosure, and $P_1$-$P_2$ is the pressure loss due to the filter attached to the gas inlet.

According to this embodiment, the mass flow rate of the low-density gas being supplied to the gas inlet is controlled such that the pressure in the hermetically sealed enclosure is higher than that in the outside of the hermetically sealed enclosure.

According to another embodiment of the present invention, the filling step is accomplished by supplying the low-density gas to a plurality of the enclosures through distributing channels from a common supply source, detecting the total mass flow rate of the low-density gas being supplied to a plurality of the enclosures, and collectively controlling the total mass flow rate of the low-density gas being supplied to a plurality of the enclosures according to the number of a plurality of the enclosures.

According to this embodiment, the filling step is accomplished by gradually bringing the actual total mass flow rate to the total mass flow rate of the low-density gas to be supplied to a plurality of the enclosures when the number of a plurality of the enclosures varies while the low-density gas is being supplied.

According to further another embodiment of the present invention, the filling step is accomplished by evaluating the concentration of the low-density gas in the enclosure according to an index which varies depending on the concentration of the low-density gas in the enclosure while the low-density gas is being supplied to the gas inlet.

According to this embodiment, the index is a magnitude of driving current being supplied to the motor that rotates the magnetic disk.

According to this embodiment, the hermetically sealed enclosure is filled with the low-density gas in such a way that the rate of change with time of the driving current which occurs as the low-density gas is introduced into the hermetically sealed enclosure is greater than that of the driving current which occurs when the temperature in the hermetically sealed enclosure changes.

According to further another embodiment of the present invention, the filling step is accomplished by closing any gap, excluding the gas inlet and gas outlet, that permits communication between the inside and outside of the enclosure before starting introduction of the low-density gas.

According to further another embodiment of the present invention, the filling step is accomplished by rotating the magnetic disk while the low-density gas is being introduced into the hermetically sealed enclosure.

According to further another embodiment of the present invention, the method includes a step of writing servo data into the magnetic disk by controlling the magnetic head and the actuator, which are accommodated in the hermetically sealed enclosure, after the low-density gas has been introduced into the hermetically sealed enclosure.

According to further another embodiment of the present invention, the low-density gas is helium.

According to the present invention, the gas inlet and gas outlet passing through the enclosure are provided respectively with filters. This structure relaxes restrictions on the environment for introduction of helium and permits easy introduction of a low-density gas into the enclosure.

It is usually difficult to fill all the enclosures uniformly with a low-density gas when a low-density gas is introduced through the gas inlet and the filter if filters differ one another in characteristic properties. However, this problem is solved by the present invention, in which the mass flow rate of low-density gas being supplied to the gas inlet is detected and controlled so that the mass flow rate of low-density gas being supplied to the gas inlet is maintained at a desired level and introduction of low-density gas into the enclosure can be accomplished efficiently.

Embodiments of the invention are now described with reference to the drawings.

Fig. 1 is an exploded perspective view showing the magnetic disk unit 1 pertaining to one embodiment of the present invention.

Fig. 2 is an exploded perspective view showing the lid 11 as a constituent of the enclosure 10.

Fig. 3 is a flow sheet showing an example of the manufacturing process for the magnetic disk unit pertaining to one embodiment of the present invention.

Fig. 4 is a diagram illustrating the step S3.

Fig. 5 is a diagram illustrating the step S5.

Fig. 6 is a diagram illustrating the step S8.

Fig. 7 is a diagram illustrating the steps S9 and S10.

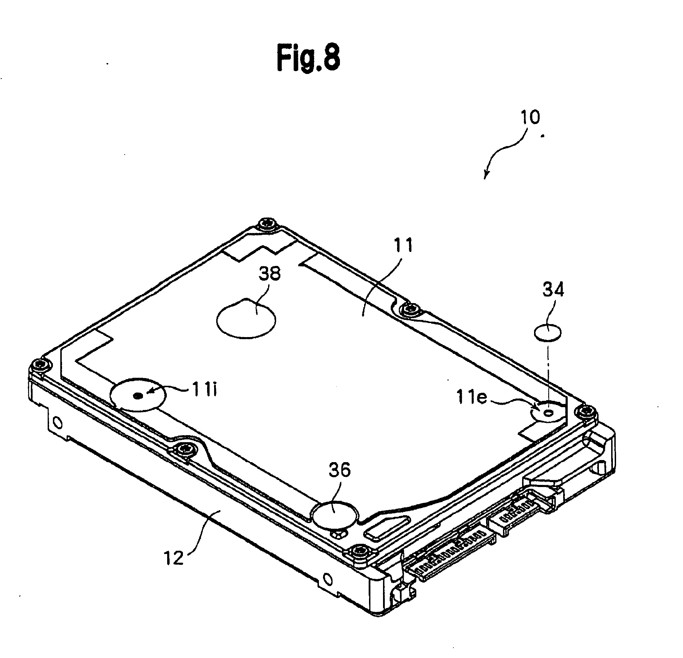

Fig. 8 is a diagram illustrating the step S16.

Fig. 9 is a block diagram showing one example of the gas introduction apparatus.

Fig. 10 is a block diagram showing another example of the gas introduction apparatus.

The embodiments of the present invention will be described below with reference to the accompanying drawings.

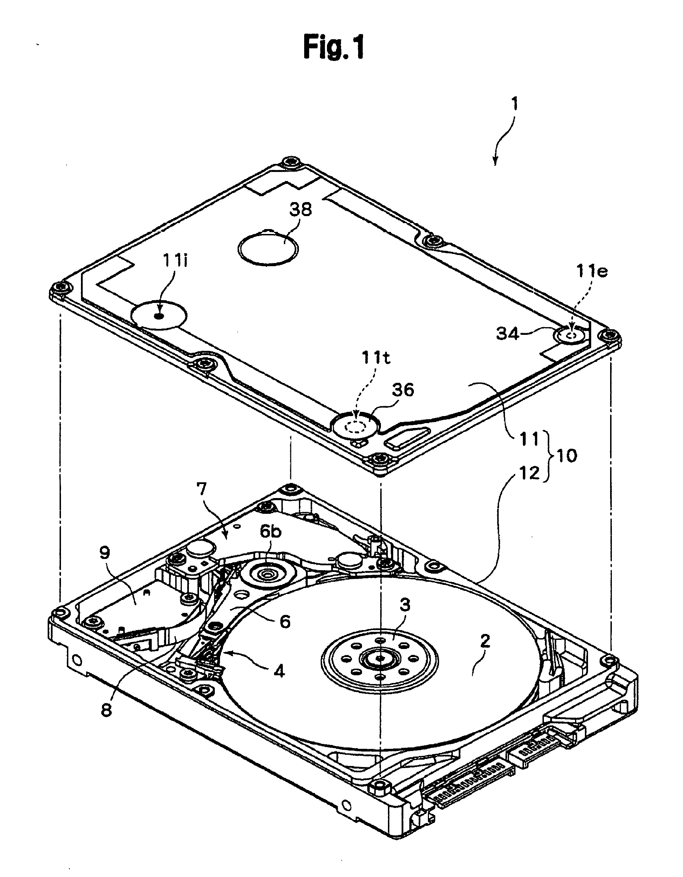

Fig. 1 is an exploded perspective view showing the magnetic disk unit 1 pertaining to one embodiment of the present invention. The magnetic disk unit 1 has its components enclosed in the enclosure 10 (DE: Disk Enclosure), which is comprised of the rectangular boxlike base 12 with an open top and the top cover 11 that closes the open top to make the enclosure 10 airtight.

The enclosure 10 accommodates the magnetic disk 2 and the head assembly 6 and other components. The magnetic disk 2 is attached to the spindle motor 3 placed on the bottom of the base 12. The magnetic disk 2 has concentric tracks (not shown) formed thereon. Each track has servo data written therein at certain intervals. The servo data include address data and burst signals.

Next to the magnetic disk 2 is the head assembly 6, which has the magnetic head 4 supported at its forward end. The magnetic head 4 floats slightly above the rotating magnetic disk 2 to write and read data. The head assembly 6 also has the voice coil motor 7 attached to its rear end. The voice coil motor 7 swings the head assembly 6 to move the magnetic head 4 nearly in the radial direction of the magnetic disk 2.

The head assembly 6 also has the FPC (Flexible Printed Circuits) 8 attached thereto. The FPC 8 extends from the connector 9 placed on the bottom of the base 12 so as to electrically connect the circuit board (not shown) on the back of the base 12 with the magnetic head 4 and the voice coil motor 7.

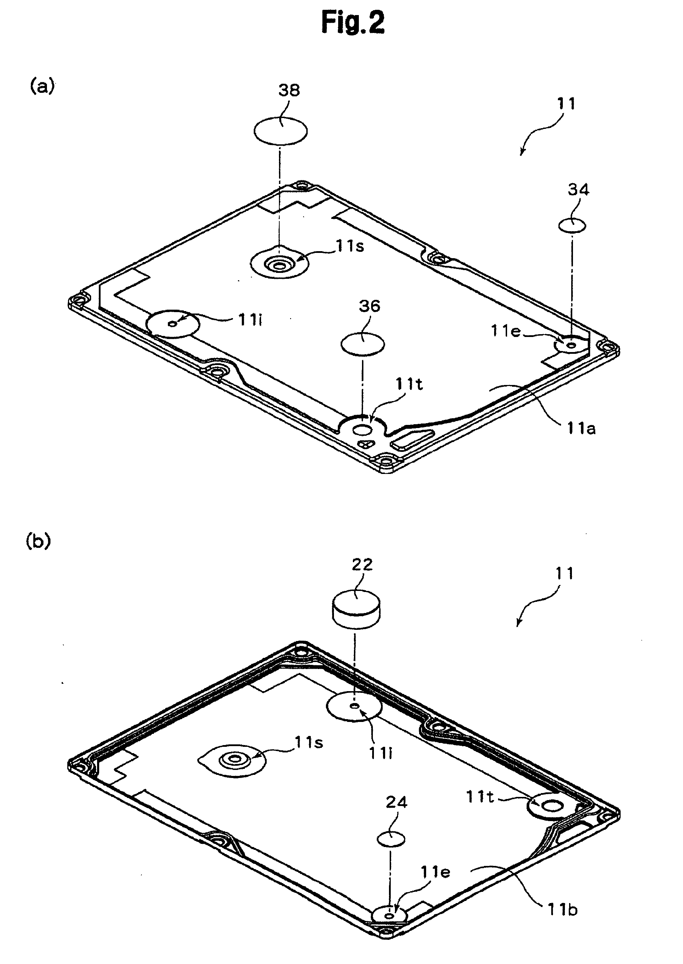

Fig. 2 is an exploded perspective view showing the top cover 11 as a constituent of the enclosure 10. Fig. 2 (a) shows the front face 11 a of the top cover 11 and Fig. 2(b) shows the rear face 11 b of the top cover 11.

The top cover 11 has the gas inlet 11 i, the gas outlet 11e, the test port 11t, and the screw hole 11s formed therein, which permit communication between the inside and outside of the enclosure 10. Incidentally, the gas inlet 11i and the gas outlet 11e may be formed in the base 12.

The gas inlet 11i is a so-called breathing port, which prevents fluctuation of pressure difference between the inside and outside of the enclosure 10. It is also used to fill the enclosure 10 with a gas in the manufacturing process as mentioned later.

The gas inlet 11i has a flat cylindrical breathing filter 22 attached to the rear face 11b of the top cover 11. To be specific, the breathing filter 22 is attached to the rear face 11b of the top cover 11 in such a way as to close the gas inlet 11i. It filters a gas that enters the enclosure 10 and prevents particles contained therein from entering the enclosure 10.

Also, the gas inlet 11i is formed at a position where there is a space between the head assembly 6 and the connector 9 that accommodates the breathing filter 22 attached to the rear face 11b of the top cover 11.

The gas outlet 11e is used to fill the enclosure 10 with a gas in the manufacturing process. It has the filter 24 of flat unwoven fabric attached to the rear face 11b of the top cover 11. It is also closed with the leak seal 34 attached to the front face 11a of the top cover 11.

The test port 11t is used for testing in the manufacturing process as mentioned later. It is closed with the leak seal 36 attached to the front face 11a of the top cover 11. Incidentally, it has no filter.

The screw hole 11s permits a screw to fasten the bearing 6b of the head assembly 6 through it. It is closed with the leak seal 38 attached to the front face 11a of the top cover 11.

The filter 22 for the gas inlet 11i excels the filter 24 for the gas outlet 11e in ability to filter off particles in a gas. Particles in a gas include those in the form of dust, moisture, chemical substance, and the like. The breathing filter 22 is comprised of a flat filter of unwoven fabric (like the one used for the filter 24), spiral flow channels to extend the length of flow pass, activated carbon to adsorb moisture, and a chemical filter to adsorb chemical substances. Because of its ability to filter out various kinds of particles for a long period of time, the breathing filter 22 is superior to the filter 24.

Although the gas outlet 11e has the sheetlike filter 24 according to this embodiment, it may also be provided with a breathing filter similar to the breathing filter 22 so that it functions as the breathing port. In this case the gas outlet 11e does not need the leak seal 38.

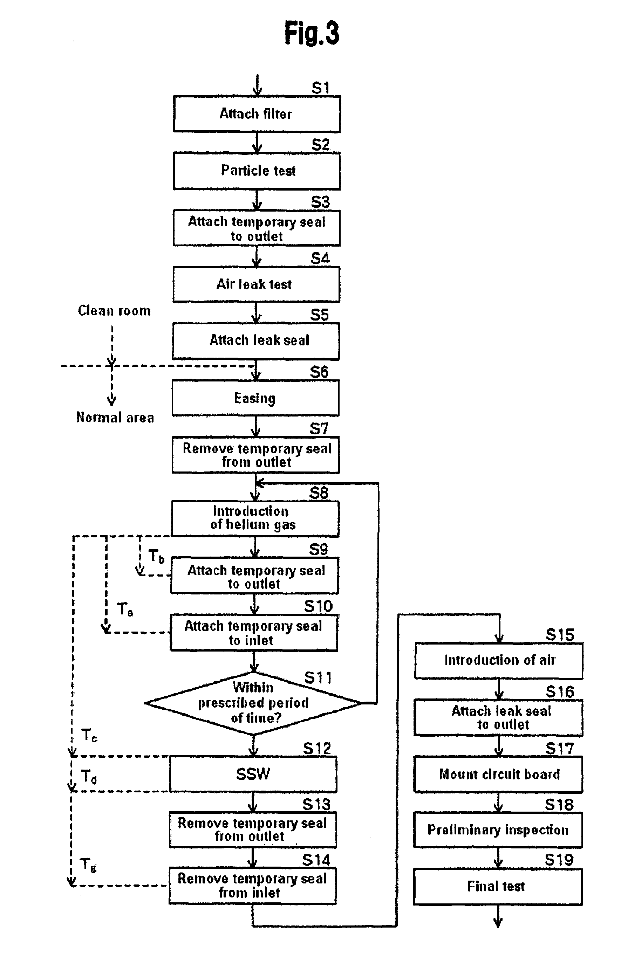

Fig. 3 shows an example of the manufacturing process for the magnetic disk unit pertaining to one embodiment of the present invention. The manufacturing process mainly represents the steps of filling the enclosure 10 with helium and performing SSW (self servo write).

The steps S1 to S5 are carried out in a clean room. The step S1 is intended to attach the breathing filter 22 and the filter 24 to the rear face 11b of the top cover 11. In other words, the rear face 11b of the top cover 11 is provided with the breathing filter 22 and the filter 24 in such a way that they close the gas inlet 11i and the gas outlet 11e, respectively. The top cover 11 having the breathing filter 22 and the filter 24 is fixed to the base 12 accommodating the magnetic disk 2 and the head assembly 6, so that the enclosure 10 is hermetically closed.

The step S2 is intended to test the closed enclosure 10 for particles therein. To be specific, a detector is inserted into the enclosure 10 through the test port 11t to count the number of particles. Incidentally, unlike the gas inlet 11i and the gas outlet 11e, the test port 11t is not provided with any filter that prevents insertion of the detector. In addition, as compared with the gas inlet 11i and the gas outlet 11e, the test port 11t has a larger diameter to facilitate insertion of the detector.

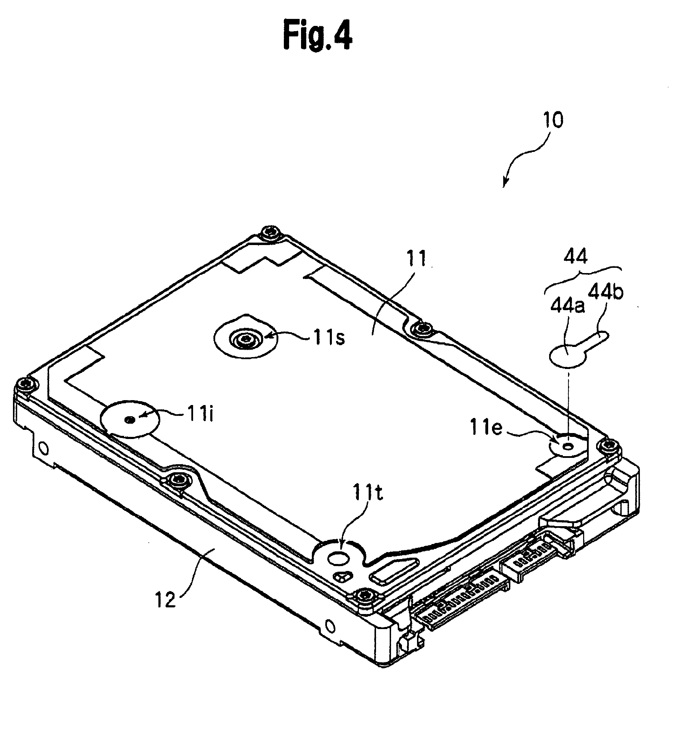

The step S3 is intended to attach a temporary seal 44 to temporarily close the gas outlet 11e, as shown in Fig. 4. The temporary seal 44 has the closing part 44a, which closes the gas outlet 11e, and the holding part 44b extending therefrom which facilitates peeling.

The temporary seal 44 minimizes the possibility of particles entering the enclosure 10 through the gas outlet 11e and the filter 24 before the step S8 (for helium introduction) mentioned later. Incidentally, the temporary seal 44 is not necessary if the filter 24 has a sufficient filtering power.

In this embodiment, the gas outlet 11e is closed because the filter 24 attached thereto is less capable than the breathing filter 22 attached to the gas inlet 11i. Moreover, both the gas outlet 11e and the gas inlet 11i may be temporarily closed.

The step S4 is intended to perform air leak test by introducing air through the test port 11t. This test makes sure that the enclosure 10 is completely air tight or free from air leakage.

Since the magnetic disk unit 1 (ready for shipment) has its gas outlet 11e closed with the leak seal 34 as shown in Fig. 1, temporarily closing the gas outlet 11e before the air leak test is equivalent to performing the air leak test under the same conditions as for the magnetic disk unit 1 ready for shipment.

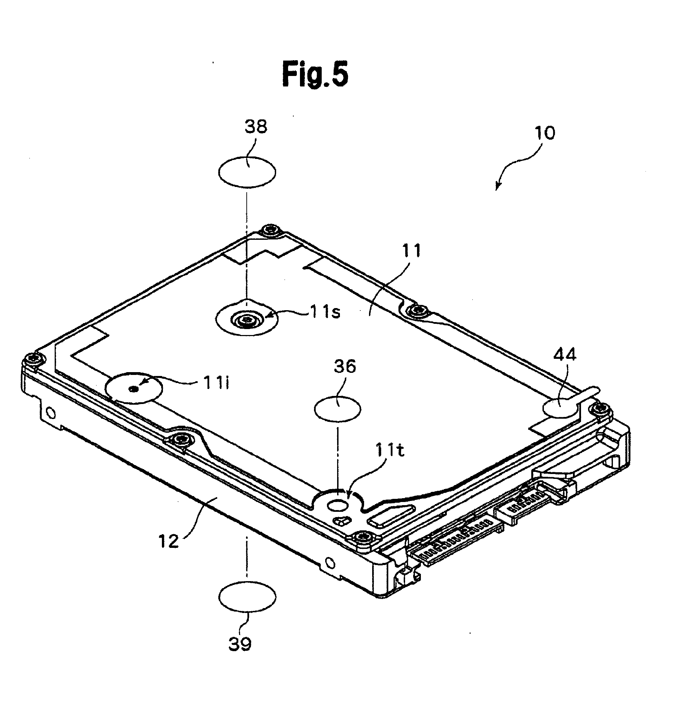

The step S5 is intended to close the test port 11t, the screw hole 11s formed in the top cover 11, and the screw hole (not shown) formed in the rear face of the base 12 with the leak seals 36, 38, and 39, respectively, as shown in Fig. 5.

The screw hole 11s is closed in this step so that the enclosure 10 does not leak helium which has been introduced into the enclosure 10 in the step S8 (mentioned later) for helium introduction. Even though the previous step S4 (for air leak test) makes sure that air does not leak from the enclosure 10, there is the possibility that helium, which is introduced in the subsequent step S8, leaks from the enclosure 10 through a very small gap which air would not pass through, because helium has small density than air. This problem is tackled by this step for closing any gap that might allow helium to leak. It is desirable to seal any gap between the base 12 and the top cover 11.

According to this embodiment, the test port 11t cannot be used as an opening for introduction or discharging of a gas, which is mentioned later, because it should be used to check for particles and air leak after the enclosure 10 has been tightly closed as mentioned above.

After the foregoing steps S1 to S5 are completed, the enclosure 10 is removed from the clean room and transferred to a normal area where air cleanliness is not controlled. The subsequent steps S6 to S19 are carried out in this normal area.

The step S6 is intended to perform AC erasing thoroughly on the magnetic disk 2 accommodated in the enclosure 10. This step is carried out by using a special erasing apparatus.

The step S7 is intended to remove the temporary seal 44 (shown in Fig. 4) which closes the gas outlet 11e. This step is preliminary to the subsequent step S8 for helium introduction. Since the step S8 for helium introduction is carried out in a normal area, it is necessary to temporarily close the gas outlet 11e until the start of helium introduction. This minimizes the possibility of particles entering the enclosure 10 through the filter 24 and the gas outlet 11e.

The step S8 is intended to introduce helium into the closed enclosure 10 through the gas inlet 11i and the gas outlet 11e. The enclosure 10 filled with helium is ready for self servo write. Although this embodiment employs helium as a gas with a lower density than air, helium may be replaced with hydrogen.

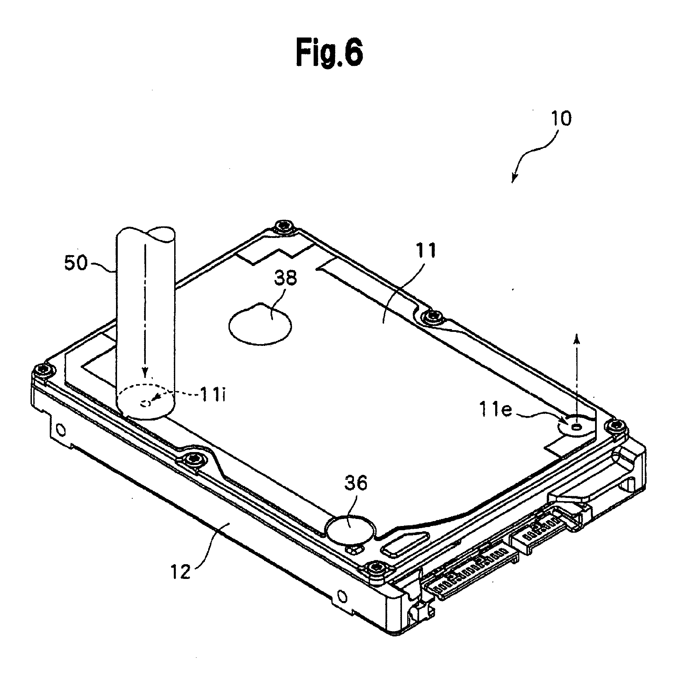

Introduction of helium may be accomplished by a gas introduction apparatus. To be specific, the nozzle 50 of the gas introduction apparatus is fitted to the gas inlet 11i as shown in Fig. 6, and helium is introduced into the enclosure 10 through this nozzle 50. The thus introduced helium pushes out the gas (mainly air) remaining in the enclosure 10 through the gas outlet 11e. In this way, air in the enclosure 10 is replaced with helium.

Helium introduction can be accomplished in a normal area because both the gas inlet 11 i and the gas outlet 11e of the enclosure 10 are provided with the breathing filter 22 and the filter 24, respectively. In other words, it is not necessary to carry out helium introduction in an environment (such as clean room) with enhanced air cleanliness. This simplifies the manufacturing process.

Since the breathing filter 22 attached to the gas inlet 11i has a better filtering ability than the filter 24 attached to the gas outlet 11e, introduction of helium through the gas inlet 11i effectively prevents entrance of particles into the enclosure 10 even though particles are contained in helium being supplied from the gas introduction apparatus.

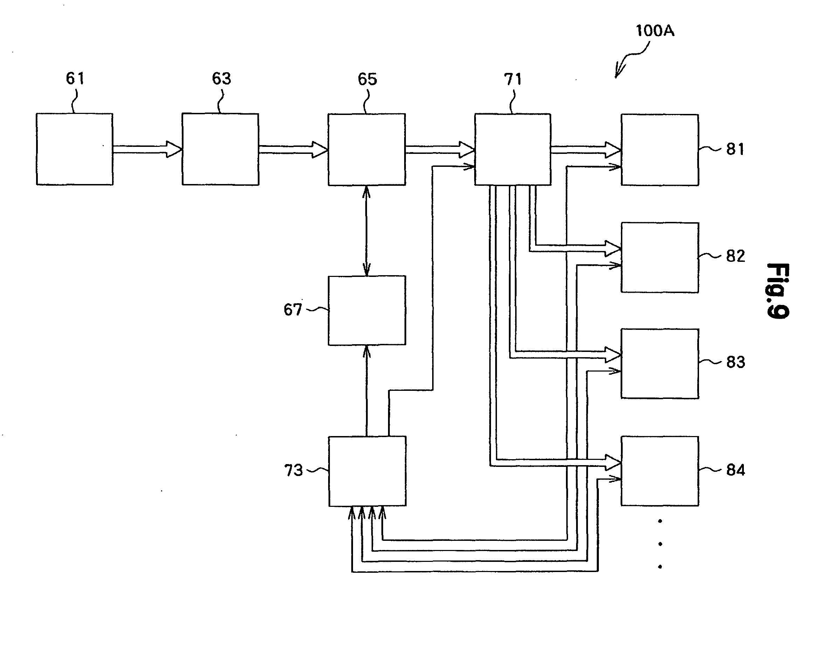

Fig. 9 is a block diagram showing one example of the gas introduction apparatus. In Fig. 9, white arrows represent the flow of gas and black arrows represent the flow of control signals.

The gas introduction apparatus 100A has fixtures 81 to 84, each of which supports the enclosure 10. Each of the fixtures 81 to 84 has the nozzle 50 shown in Fig. 6 (mentioned above). The nozzle 50 is positioned at the gas inlet 11i of the enclosure 10, so that it feeds helium to the gas inlet 11i.

The gas introduction apparatus 100A feeds helium by means of the gas supply source 61 (like a helium gas cylinder), the pressure regulator 63 to control the pressure of helium to be supplied, the flow control value 65 to control the flow of helium to be supplied, and the flow controller 67 to control the flow control valve 65.

The gas introduction apparatus 100A also distributes helium by means of the branch valve 71 to distribute helium from the flow control valve 65 to each of the fixtures 81 to 84, the branch valve 71 being controlled by the fixture controller 73.

The flow control valve 65 has a sensor which detects the mass flow rate of helium and feeds back the detected mass flow rate to the flow controller 67. The flow controller 67, which complies the detected mass flow rate, drives the flow control valve 65 to keep a prescribed mass flow rate of helium. Incidentally, the flow control valve 65 depends also on the sensor's sensitivity.

The gas supply source 61 feeds helium to all the fixtures 81 to 84. Therefore, the flow control valve 65 detects and controls the total mass flow rate of helium being fed to the enclosures 10.

Each of the fixtures 81 to 84 has a sensor to detect that each fixture holds the enclosure 10. Signals from the sensor cause the fixture controller 73 to recognize that which one of the fixtures 81 to 84 holds the enclosure 10.

The fixture controller 73 drives the branch valve 71 so that helium is fed to one of the fixtures 81 to 84 which holds the enclosure 10.

The fixture controller 73 alters the mass flow rate of helium which the flow controller 67 controls, according to the number of the fixtures 81 to 84 which hold the enclosure 10.

The gas introduction apparatus 100A mentioned above keeps a prescribed mass flow rate of helium to be fed to the gas inlet 11 i of the enclosure 10; therefore, it efficiently fills the enclosure 10 with helium.

In addition, the gas introduction apparatus 100A can fill more than one enclosure 10 with helium at one time because it varies the mass flow rate of helium according to the number of the enclosures 10 held on the fixtures. This holds true also in the case where the breathing filter 22 attached to the enclosure 10 varies individually in performance because the total mass flow rate of helium being fed to more than one enclosures 10 is kept constant.

If the number of the enclosures 10 held on the fixtures 81 to 84 varies while helium is being fed, the flow controller 67 should preferably be controlled in such a way that the total mass flow rate of helium to be fed to the newly added enclosures 10 gradually approaches the actual total mass flow rate. In this way it is possible to prevent the total mass flow rate of helium from overshooting.

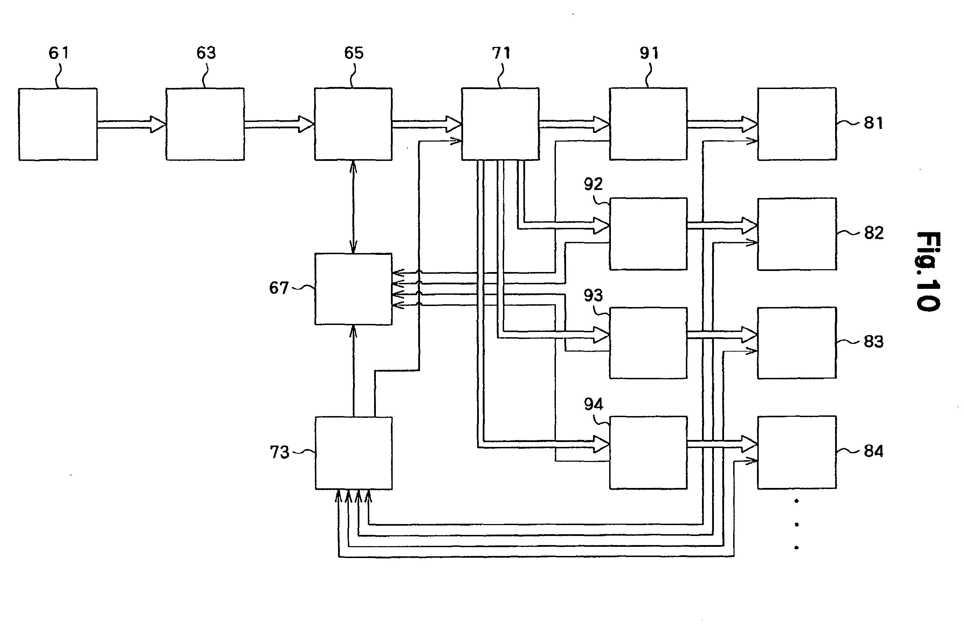

Fig. 10 is a block diagram showing another example of the gas introduction apparatus. The same components shown in Figs. 9 and 10 are given the same reference numerals, and their explanation is omitted.

The gas introduction apparatus 100B has, in addition to the components in the first example mentioned above, the pressure sensors 91 to 94, which correspond to the fixtures 81 to 84, respectively. The pressure sensors 91 to 94 detect the pressure (in the nozzle 50) of helium being distributed to the individual fixtures 81 to 84 from the branch valve 71. They feed back the detected pressure to the flow controller 67.

The flow controller 67 controls the mass flow rate of helium so as to keep a prescribed pressure in each enclosure 10 according to the total mass flow rate of helium which is fed back from the flow control valve 65 and the pressure of helium which is fed back from the pressure sensors 91 to 94. To be specific, the flow controller carries out calculations according to the following formula.

$$Q_1 = c\frac{\pi}{4}d_{in}^{\ 2}\sqrt{\frac{2(P_1 - P_2)}{\rho}} \qquad \text{(Formula 1)}$$

where, $Q_1$ is the mass flow rate of helium being fed to the gas inlet 11i, c is a flow rate constant, $d_{in}$ is a diameter of the gas inlet 11i, $P_1$ is the pressure of helium being fed to the gas inlet 11i, $P_2$ is the pressure in the tightly closed enclosure 10, and $P_1$-$P_2$ is the pressure loss due to the filter attached to the gas inlet 11i.

a. Incidentally, the mass flow rate $Q_1$ of helium being fed to the gas inlet 11i may be a quotient of a/b, where a represents the total mass flow rate of helium which is detected by the flow control valve 65 and b represents the number of the enclosures 10 held on the fixtures 81 to 84.

The formula 1 given above permits the flow controller 67 to calculate the pressure $P_2$ in the enclosure 10 from the mass flow rate $Q_1$ and pressure $P_1$ of helium being fed to the gas inlet 11 i (with din being a constant). Thus, the mass flow rate of helium can be controlled such that the pressure $P_2$ in the enclosure 10 is kept at a prescribed level.

The pressure $P_2$ in the enclosure 10 should preferably be higher than the pressure outside the enclosure 10 (or the pressure outside the gas outlet 11e). Raising the pressure $P_2$ in the enclosure in this way prevents air from entering the enclosure 10 immediately after introduction of helium. This provides a certain length of time until the temporary seals 42 and 44 are attached in the subsequent steps S9 and S10.

The description of the embodiment is continued by referring back to the step S8 and Fig. 6. According to this embodiment, introduction of helium is accomplished by the nozzle 50 attached to the gas inlet 11i. However, it is also possible to attach another nozzle to the gas outlet 11e so that gas is extracted from the enclosure 10 through this nozzle. In addition, this arrangement is desirable because helium can be collected for recycling from the gas discharged form the gas outlet 11e.

The filter 24 attached to the gas outlet 11e should preferably have a larger pressure loss than the breathing filter 22 attached to the gas inlet 11i. In addition, the gas outlet 11e should preferably have a smaller diameter than the gas inlet 11i. This means that the gas passes through the gas outlet 11e more difficultly than the gas inlet 11i and hence the pressure in the enclosure 10 increases at the time of helium introduction. Raising the pressure $P_2$ in the enclosure in this way prevents air from entering the enclosure 10 immediately after introduction of helium. This provides a certain length of time until the temporary seals 42 and 44 are attached in the subsequent steps S9 and S10.

Introduction of helium gas in the step S8 is carried out while the magnetic disk 2 (accommodated in the enclosure 10) is being rotated by the externally driven spindle motor 3. The rotating magnetic disk 2 readily diffuses the helium gas (which has been introduced from the gas inlet 11i) throughout the enclosure 10, thereby helping effective filling of helium gas.

For introduction of helium, which is carried out while the magnetic disk 2 is rotating, the gas inlet 11i and the gas outlet 11e should preferably be provided along the edge of the magnetic disk 2 because the gas in the enclosure flows along the periphery of the magnetic disk 2 in its rotating direction. For complete diffusion of helium (introduced through the gas inlet 11i) in the enclosure 10, the gas inlet 11i and the gas outlet 11e should preferably be provided at a certain distance apart in the direction of rotation of the magnetic disk 2. Thus, according to this embodiment, the gas inlet 11i and the gas outlet 11e are provided at positions which are mutually opposite, with the magnetic disk 2 in between.

At the time of helium introduction, with the magnetic disk 2 rotating, it is possible to know the concentration of helium in the enclosure 10 from the magnitude of current being supplied to the spindle motor 3. As the concentration of helium in the enclosure 10 increases, resistance to the rotating magnetic disk 2 decreases, which leads to a decrease in current to drive the spindle motor 3 at a prescribed speed. Therefore, the magnitude of current being supplied to the spindle motor 3 can be used as an index that denotes the concentration of helium in the enclosure 10.

Introduction of helium is accomplished in such a way that the rate of change with time of the driving current which occurs as helium is introduced into the enclosure 10 is greater than that of the driving current which occurs when the temperature in the enclosure 10 changes, as represented by the formula 2 below.

$$\frac{\Delta i_{he}}{\Delta t} > \frac{\Delta i_{temp}}{\Delta t} \qquad \text{(Formula 2)}$$

where, $\Box i_{he}$ is an increment of the driving current at the time of introduction of helium into the enclosure 10, $\Box i_{temp}$ is an increment of the driving current at the time of temperature change in the enclosure 10 (which would occur when a certain amount of heat is added), and $\Box t$ is a length of time required for introduction of helium into the enclosure 10.

It is usually difficult to evaluate the concentration of helium in the enclosure 10 from the driving current because change in driving current due to change in temperature in the enclosure 10 is much larger than that due to change in helium concentration in the enclosure 10. However, if helium is introduced at a rate greater than that at which temperature changes in the enclosure 10, then it is possible to evaluate the concentration of helium without consideration of the temperature change in the enclosure 10.

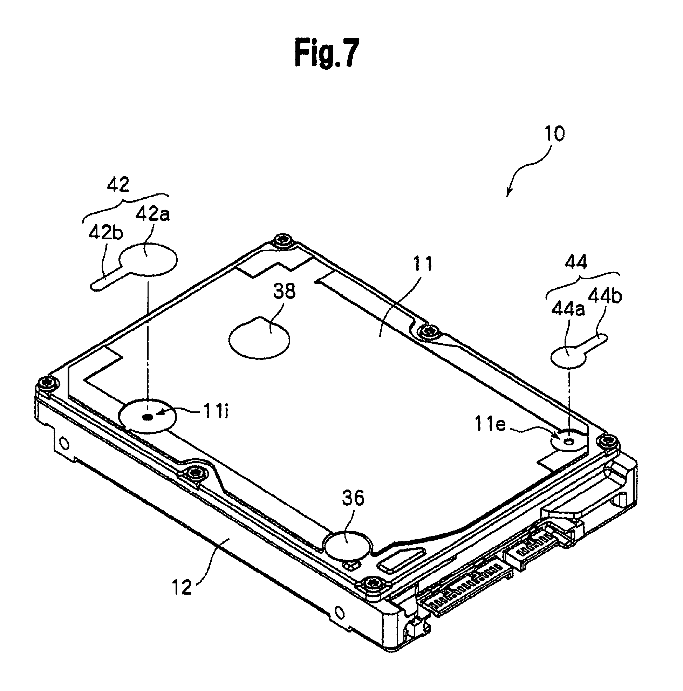

After the step S8 for helium introduction is completed, the steps S9 and S10 start, in which the temporary seals 42 and 44 are attached (as shown in Fig. 7) to temporarily close the gas inlet 11i and the gas outlet 11e to prevent helium from leaking from the enclosure 10 during the step S12 for self servo write.

The temporary seal 44 to close the gas outlet 11e is attached before the temporary seal 42 to close the gas inlet 11i is attached. (That is, $T_b < T_a$) This is because the filter 24 for the gas outlet 11e is less resistant to leakage than the breathing filter 22 for the gas inlet 11i.

The temporary seals 42 and 44 should be attached within $T_a$ and $T_b$, which are shorter than a prescribed length of time ($T_e$), after helium has been introduced into the enclosure 10. $T_e$ is defined as a length of time required for the concentration of helium in the enclosure 10 to decreases below a permissible range if the gas inlet 11 i and the gas outlet 11e are not closed after helium introduction into the enclosure 10. In the case where $T_a$ and $T_b$ exceed $T_e$, the step S11 goes back to the step S8, in which helium is introduced again.

The step S12 is intended to write servo data in the magnetic disk 2 or to perform so-called self servo write (SSW) by externally controlling the magnetic head 4 and the voice coil motor 7 accommodated in the closed enclosure 10.

The magnetic head 4 and the voice coil motor 7 are controlled by the external servo data recording apparatus through the connector 9 and the FPC 8 in the enclosure 10. To be specific, the servo data recording apparatus supplies the magnetic head 4 with servo data to be written in the magnetic disk 2. It also acquires servo data which the magnetic head 4 reads out of the magnetic disk 2. Further, in response to servo data acquired, it generates and outputs drive signals for the voice coil motor 7.

The writing of servo data proceeds to form a new track as the magnetic head 4 follows the previously formed track due to the fact that the recording and reproducing elements carried by the magnetic head 4 are displaced in the radial direction of the magnetic disk 2. In other words, the reproducing element reads out servo data from the previously formed track and the acquired servo data causes the magnetic head 4 to follow the track. Then the recording element writes the servo data to form a new track. The procedure to form another new track continues in the radial direction of the magnetic disk 2.

The foregoing procedure forms tracks (with nearly complete roundness and little distortion) on the magnetic disk 2 because the enclosure 10 is filled with helium by the step S8 for helium introduction.

Since the gas inlet 11i and the gas outlet 11e of the enclosure 10 are provided respectively with the breathing filter 22 and the filter 24 and are also closed respectively with the temporary seals 42 and 44, leakage of helium from the enclosure 10 is suppressed. As the result, self servo write can be accomplished while the enclosure 10 is placed in a normal area.

In addition, since the step S8 for helium introduction is also carried out in a normal area as mentioned above, it is possible to reduce time from the introduction of helium to the start of self servo write. As the result, it is possible to perform self servo write while the concentration of helium still remains high in the enclosure 10.

Time ($T_c$ + $T_d$) from the introduction of helium into the enclosure 10 to the completion of self servo write should not exceed the prescribed time $T_f$ which is defined as time for the concentration of helium in the enclosure 10 to decrease below the permissible range when the gas inlet 11i and the gas outlet 11e are closed after helium has been introduced into the enclosure 10.

After the step S12 for self servo write is completed, the temporary seals 42 and 44 are removed from the gas inlet 11i and the gas outlet 11e in the steps S13 and S14.

The Time ($T_c$ + $T_d$ + $T_g$) from the introduction of helium into the enclosure 10 to the completion of self servo write and the removal of the temporary seals 42 and 44 should not exceed the prescribed time $T_h$ which is defined as time for helium to begin to leak from the enclosure 10 and change to occur in components after the introduction of helium into the enclosure 10. Change in components due to leakage of helium from the enclosure 10 means deformation of the top cover 11 caused by pressure decrease in the enclosure 10 or degradation of grease in sliding parts.

The step S15 is intended to introduce air into the closed enclosure 10 through the gas inlet 11i and the gas outlet 11e. This step can be carried out in the same way as the step S8 mentioned above. The step S12 for self servo write is followed by the step S15 for air introduction into the enclosure 10 in order that the subsequent step S18 for preliminary test and the step S19 for final test are carried out under the same conditions as those under which the magnetic disk unit 1 (ready for shipment) is tested.

When air is introduced into the enclosure 10 through the gas inlet 11i, helium is discharged from the enclosure 10 through the gas outlet 11e. Therefore, it is desirable to collect and recycle the discharged helium.

The step S16 is intended to close the gas outlet 11e by attaching the leak seal 34 thereto. The leak seal 34 prevents particles from entering the enclosure 10 through the gas outlet 11e after the magnetic disk unit 1 is made ready for shipment. In this embodiment, the gas outlet 11e is closed by the filter 24 attached thereto which is inferior in filtering power to the breathing filter attached to the gas inlet 11i.

The magnetic disk unit 1 is completed by the final steps S17 (for attachment of a circuit board to the rear side of the enclosure 10), S18 (for preliminary test), and S19 (for final test).

**EXPLANATION OF REFERENCE NUMERALS**

| | |
|---|---|
| 1 | Magnetic disk unit |
| 2 | Magnetic disk |
| 3 | Spindle motor |
| 4 | Magnetic head |
| 6 | Head assembly |
| 7 | Voice coil motor |
| 8 | FPC |
| 9 | Connector |
| 10 | Enclosure |
| 11 | Top cover |
| 11 | i Gas inlet (breathing port) |
| 11e | Gas outlet |
| 11t. | Test port |
| 11 | s Screw hole |
| 12 | Base |
| 22 | Breathing filter |
| 24 | Filter |
| 34, 36, 38, 39 | Leak seals |
| 42, 44 | Temporary seals |
| 50 | nozzle |
| 61 | Gas supply source |
| 63 | Pressure regulator |
| 65 | Flow control valve |
| 67 | Flow controller |
| 71 | Branch valve |
| 73 | Fixture controller |
| 81-84 | Fixtures |

91-94    Pressure sensors
100A, 100B    Gas introduction apparatus

**Claims**

1. A method for manufacturing a magnetic disk unit comprised of a magnetic disk to store data, a magnetic head to write and read said data, and an actuator to move said magnetic head relative to said magnetic disk, which are accommodated in a hermetically sealed enclosure, said enclosure having a gas inlet and a gas outlet for communication between the inside and outside thereof, said gas inlet and gas outlet having respective filters attached thereto, wherein said method includes a step of filling said enclosure with a low-density gas having a lower density than air through said gas inlet by detecting the mass flow rate of said low-density gas being supplied to said gas inlet and controlling the mass flow rate of said low-density gas being supplied to said gas inlet according to the thus detected flow rate.

2. The method for manufacturing a magnetic disk unit as defined in Claim 1, wherein said filling step is accomplished further by detecting the pressure of said low-density gas being supplied to said gas inlet and controlling the mass flow rate of said low-density gas being supplied to said gas inlet according to the thus detected flow rate and pressure of said low-density gas.

3. The method for manufacturing a magnetic disk unit as defined in Claim 2, wherein the mass flow rate of said low-density gas being supplied to said gas inlet is controlled such that the pressure in said enclosure is maintained at a prescribed level according to the mass flow rate and pressure of said low-density gas which have been detected and the formula 1 given below.

$$Q_1 = c \frac{\pi}{4} d_{in}^{\ 2} \sqrt{\frac{2(P_1 - P_2)}{\rho}} \quad \text{(Formula 1)}$$

where, $Q_1$ is the mass flow rate of said low-density gas being supplied to said gas inlet, c is a flow rate constant, $d_{in}$ is a diameter of said gas inlet, $P_1$ is the pressure of said low-density gas being supplied to said gas inlet, $P_2$ is the pressure in said hermetically sealed enclosure, and $P_1$-$P_2$ is the pressure loss due to the filter attached to said gas inlet.

4. The method for manufacturing a magnetic disk unit as defined in Claim 3, wherein the mass flow rate of said low-density gas being supplied to said gas inlet is controlled such that the pressure in said hermetically sealed enclosure is higher than that in the outside of said hermetically sealed enclosure.

5. The method for manufacturing a magnetic disk unit as defined in Claim 1, wherein said filling step is accomplished by supplying said low-density gas to a plurality of said enclosures through distributing channels from a common supply source, detecting the total mass flow rate of said low-density gas being supplied to a plurality of said enclosures, and collectively controlling the total mass flow rate of said low-density gas being supplied to a plurality of said enclosures according to the number of a plurality of said enclosures.

6. The method for manufacturing a magnetic disk unit as defined in Claim 1, wherein said filling step is accomplished by gradually bringing the actual total mass flow rate to the total mass flow rate of said low-density gas to be supplied to a plurality of said enclosures when the number of a plurality of said enclosures varies while said low-density gas is being supplied.

7. The method for manufacturing a magnetic disk unit as defined in Claim 1, wherein said filling step is accomplished by evaluating the concentration of said low-density gas in said enclosure according to an index which varies depending on the concentration of said low-density gas in said enclosure while said low-density gas is being supplied to said gas inlet.

8. The method for manufacturing a magnetic disk unit as defined in Claim 7, wherein said index is a magnitude of driving current being supplied to the motor that rotates said magnetic disk.

9. The method for manufacturing a magnetic disk unit as defined in Claim 7, wherein said hermetically sealed enclosure is filled with said low-density gas in such a way that the rate of change with time of the driving current which occurs as said low-density gas is introduced into said hermetically sealed enclosure is greater than that of the driving current which occurs when the temperature in said hermetically sealed enclosure changes.

10. The method for manufacturing a magnetic disk unit as defined in Claim 7, wherein said filling step is accomplished by closing any gap, excluding said gas inlet and gas outlet, that permits communication between the inside and outside of said enclosure before starting introduction of said low-density gas.

11. The method for manufacturing a magnetic disk unit as defined in Claim 1, wherein said filling step is accomplished by rotating said magnetic disk while said low-density gas is being introduced into said hermetically sealed enclosure.

12. The method for manufacturing a magnetic disk unit as defined in Claim 1, which includes a step of writing servo data into said magnetic disk by controlling said magnetic head and said actuator, which are accommodated in said hermetically sealed enclosure, after said low-density gas has been introduced into said hermetically sealed enclosure.

13. The method for manufacturing a magnetic disk unit as defined in Claim 1, wherein said low-density gas is helium.

# Fig.1

# Fig.2

(a)

(b)

# Fig.3

S1
Attach filter

S2
Particle test

S3
Attach temporary seal
to outlet

S4
Air leak test

S5
Attach leak seal

Clean room

Normal area

S6
Easing

S7
Remove temporary seal
from outlet

S8
Introduction
of helium gas

$T_b$

S9
Attach temporary seal
to outlet

$T_a$

S10
Attach temporary seal
to inlet

S11
Within
prescribed period
of time?

$T_c$

S12
SSW

$T_d$

S13
Remove temporary seal
from outlet

S14
Remove temporary seal
from inlet

$T_e$

S15
Introduction of air

S16
Attach leak seal
to outlet

S17
Mount circuit board

S18
Preliminary inspection

S19
Final test

13

# Fig.4

# Fig.5

# Fig.6

# Fig.7

# Fig.8

EP 2 065 887 A1

**Fig.9**

Fig.10

Europäisches
Patentamt

European
Patent Office

Office européen
des brevets

## EUROPEAN SEARCH REPORT

**Application Number**

EP 08 01 8000

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2003/026033 A1 (FIORAVANTI LOUIS JOHN [US] ET AL) 6 February 2003 (2003-02-06)<br>* paragraph [0023] - paragraph [0057]; figures * | 1,2,7,8,<br>10-13<br><br>3-6,9 | INV.<br>G11B5/596 |
| A | US 2006/066992 A1 (CHAN ANDRE [US] ET AL) 30 March 2006 (2006-03-30)<br>* paragraph [0022] - paragraph [0049]; figures * | 1-13 | |
| A | US 2006/044675 A1 (FUKUSHIMA CRAIG [US] ET AL) 2 March 2006 (2006-03-02)<br>* paragraph [0021] - paragraph [0042]; figures * | 1-13 | |
| A | EP 0 287 768 A (IBM [US]) 26 October 1988 (1988-10-26)<br>* page 3, column 4, line 22 - page 5, column 7, line 28; figures * | 1-13 | |
| P,A | US 2007/289971 A1 (OLSZEWSKI JASON R [US]) 20 December 2007 (2007-12-20)<br>* paragraph [0029] - paragraph [0040]; figures * | 1-13 | TECHNICAL FIELDS SEARCHED (IPC)<br><br>G11B |
| E | US 2008/310048 A1 (HIRONO YOSHIYUKI [JP] ET AL) 18 December 2008 (2008-12-18)<br>* paragraph [0028] - paragraph [0057]; figures * | 1-13 | |

The present search report has been drawn up for all claims

| Place of search | Date of completion of the search | Examiner |
|---|---|---|
| The Hague | 4 February 2009 | Geoghegan, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 8000

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2009

| Patent document cited in search report | | Publication date | Patent family member(s) | | Publication date |
|---|---|---|---|---|---|
| US 2003026033 | A1 | 06-02-2003 | NONE | | |
| US 2006066992 | A1 | 30-03-2006 | NONE | | |
| US 2006044675 | A1 | 02-03-2006 | NONE | | |
| EP 0287768 | A | 26-10-1988 | JP | 1858747 C | 27-07-1994 |
| | | | JP | 5065958 B | 20-09-1993 |
| | | | JP | 63263688 A | 31-10-1988 |
| | | | US | 4780776 A | 25-10-1988 |
| US 2007289971 | A1 | 20-12-2007 | NONE | | |
| US 2008310048 | A1 | 18-12-2008 | JP | 2008310891 A | 25-12-2008 |

EPO FORM P0459

For more details about this annex : see Official Journal of the European Patent Office, No. 12/82

**EP 2 065 887 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006040423 A